Europäisches Patentamt

European Patent Office

Office européen des brevets

(19)

(11) Publication number: **0 049 755**
B1

(12) **EUROPEAN PATENT SPECIFICATION**

(45) Date of publication of patent specification: **04.07.84**

(21) Application number: **81106707.3**

(22) Date of filing: **28.08.81**

(51) Int. Cl.³: **G 11 B 5/48,** G 11 B 5/60, G 11 B 17/32

(54) **Magnetic head assembly.**

(30) Priority: **09.10.80 US 195585**

(43) Date of publication of application:
**21.04.82 Bulletin 82/16**

(45) Publication of the grant of the patent:
**04.07.84 Bulletin 84/27**

(84) Designated Contracting States:
**DE FR GB**

(56) References cited:
**DE - A - 2 840 500**
**GB - A - 1 475 946**

**IBM TECHNICAL DISCLOSURE BULLETIN Vol.
20, No. 11A, April 1978 New York M.W.J.
CARMICHAEL "Skewed Axis Actuator For Disk
File" pages 4623, 4624**

**IBM TECHNICAL DISCLOSURE BULLETIN Vol.
20, No. 8, January 1978 New York W. HEHL et
al. "Spherical Multigroove Magnetic Head
Design" pages 3185, 3186**

(73) Proprietor: **International Business Machines
Corporation
Old Orchard Road
Armonk, N.Y. 10504 (US)**

(72) Inventor: **Radman, Anton Joseph, Jr.
1820 East 5725 South
Ogden Utah 84403 (US)**
Inventor: **Yudico, Richardo
9151 East Deer Trail
Tucson Arizona 85710 (US)**

(74) Representative: **Gasslander, Sten
IBM Svenska AB Box 962
S-181 09 Lidingö (SE)**

Courier Press, Leamington Spa, England.

## Description

This invention relates to magnetic head assemblies for use in transducing coaction with a flexible magnetic disk. Such disks are often referred to as floppy disks.

Floppy disk files generally employ a rotatable nonrigid magnetic disk as the recording medium which coacts in transducing relation with a movable magnetic head. The transducing gap portion of the magnetic head may be in intimate contact with the floppy disk or in pseudo-contact, in which case there is an infinitesimal spacing between the magnetic transducer and the disk surface.

In those disk files where the head arm is pivoted to move in an arcuate path over concentric data tracks on the disk, in a substantially radial direction, differences in orientation of the magnetic head relative to the disk surface are experienced, as the head is moved between the inner data tracks and outer data tracks. Specifically, head skew may be as much as 35° relative to the tangential line of the disk at the outer track, and thus the transducing gap may no longer be properly aligned with selected data tracks on the floppy disk.

In GB—A—1475946, there is disclosed a magnetic head having a central transducing gap therein and a pair of grooves. The grooves provide grooved regions symmetrical on either side of the gap. The effect of the grooves on a recording medium across the gap face of the head is to generate an air pressure differential to draw the medium into close proximity with the head.

If such a head were to be mounted on a pivoted arm for arcuate movement across a floppy disk, the effect of the grooves upon the disk is not the same when the head is located on the inner tracks on the disk and on the outer tracks.

The invention seeks to compensate for skew experienced by a pivotally mounted magnetic head in its arcuate movement relative to a floppy disk.

Accordingly, a magnetic head assembly for use in transducing coaction with a flexible magnetic disk, comprising a magnetic head having a transducing gap therein and grooved regions on either side of the gap, is characterised in that the head is mounted on a pivoted support arm for arcuate movement across the disk and that the grooved regions located on the outboard side of the magnetic gap have a substantially larger area than the grooved regions on the inboard side of the magnetic gap.

Conveniently, the grooved regions include a pair of symmetrical grooves and an offset groove.

Alternatively, the grooved regions include at least one pair of parallel grooves formed in the magnetic head, one groove of the pair being wider than the other groove of the pair.

The scope of the invention is defined by the appended claims; and how it can be carried into effect is hereinafter particularly described with reference to the accompanying drawings, in which:

Figure 1 is a cross-sectional representational view of a floppy disk file, including a magnetic head assembly according to the invention;

Figure 2 is a side view of a pivoted arm and head assembly for the file of Fig. 1;

Figure 3 is a plan view of the file and pivoted head arm assembly of Figs. 1 and 2, without the floppy disk;

Figure 4 is an enlarged isometric view of a portion of the head arm assembly depicted in Fig. 3; and

Figure 5 is an isometric view of the magnetic head of Fig. 4.

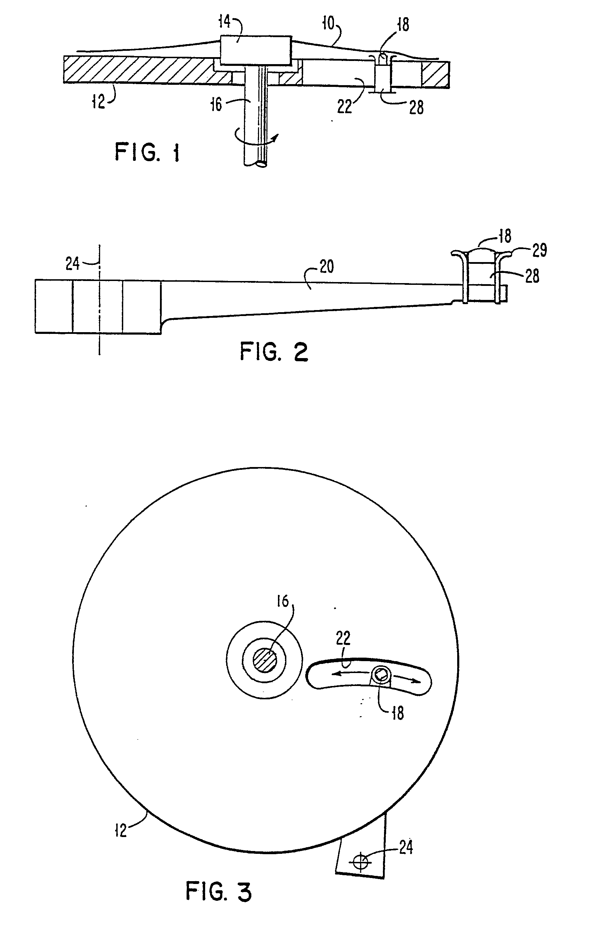

A magnetic disk drive (Fig. 1) includes a flexible or floppy magnetic disk 10 and a rigid metal support plate 12. The disk 10 is mounted on a central hub 14 which is detachably secured to a rotatable drive shaft 16. A magnetic head 18 is mounted at one end of an arm 20 (Fig. 2) which is mounted at the other end on a pivotable shaft (not shown) to pivot about a pivot axis 24 parallel to the axis of the shaft 16. The head 18 is positioned to coact in transducing relation with the floppy disk 10. An arcuate slot 22 (Fig. 3) is formed in the plate 12 to allow the head 18 to engage the disk 10 as it rotates and to move in an arcuate substantially radial path as the arm 20 is pivoted.

The head 18 (Fig. 4) which is formed from ferrite or ceramic slabs and has a contoured face 26, is positioned within a cylindrical housing 28 on the arm 20. The cylindrical housing 28 is sealed at the bottom from ambient air. The housing 28 has a flange 29 with a toroidal upper surface which contacts the floppy disk 10 during operation. A centre rail 38 of the head 18 incudes a transducing gap 32.

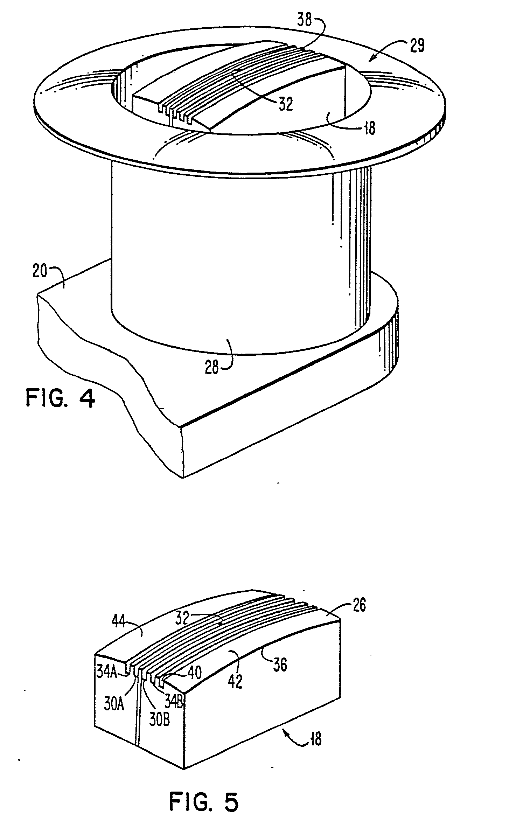

The contoured face 26 incorporates a pair of central, parallel grooves 30A and 30B (Fig. 5) on either side of the transducing gap 32. The gap 32 is transverse to the longitudinal direction of the grooves. An additional pair of spaced parallel grooves 34A and 34B are provided on either side of the central grooves 30A and 30B. The pairs of grooves are of equal widths, and form grooved regions symmetrical on either side of the gap.

In use, and with the disk 10 rotating, an air pressure differential is generated between the rotating disk and the grooves in the contoured surface of the head and the flanged cylindrical housing. This pressure differential draws the rotating floppy disk towards the head, so that the head 18 is very closely spaced from the surface of the disk 10.

With the head 18, as thus far described, that is, with only the two pairs of symmetrical grooves 30A, 30B, 34A and 34B in the contoured surface 26, it has been found that as the head 18 is moved, by pivotation of the arm 20, from the inner data tracks on the disk to the outer data tracks, the skewed relationship produced between the grooves in the head and the tangential line of the disk surface at the outer tracks of the disk, produces deleterious effects. That area of the flexible disk surface which flies at the closest spacing from the head is displaced radially and inwardly relative to the centre rail 38 of the head, so that the selected data track is not in proper alignment with the transducing gap 32. As a result, signal distortion and error are experienced.

In the embodiment of the invention illustrated, the grooved regions on either side of the gap are made asymmetric by forming an additional offset groove 40 (Fig. 5) in the contoured surface 26 of the magnetic head 18. The offset groove 40 is located between the groove 34A and the outer edge 36 of the head, that is the edge which is closest to the periphery of the disk 10. The groove 40 is parallel to and of the same width and depth as the paired grooves 30A, 30B, 34A and 34B. The additional groove 40 acts to create an additional pressure differential so that the outer rail portion 42 of the contoured surface 26 closer to the groove 40 than the outer rail portion 44 will be spaced closer to the flexible disk. The spacing between the rail portions 42 and 44 and the disk surface decreases at the outer tracks, which move at greater linear speeds than the inner tracks. The closer spacing resulting from the additional groove 40 compensates for the skewed relation between the disk surface and the head gap surface. The asymmetrical grooved configuration causes the portion of the flexible disk that flies closest to the contoured face 26 of the head to be located adjacent to the centre rail 38 and the transducing gap 32. In this way, signal amplitude and resolution are effectively improved.

The same effect as is obtained from the additional offset groove, can be obtained by widening the outermost groove of the symmetrical pair or pairs, which is closest to the periphery of the disk.

Thus, in the head shown in Fig. 5, the groove 40 is omitted and the groove 34B widened. For example, if the grooves 30A, 30B and 34A are 0.1016mm (.004 inch) wide, then the outboard groove 34B may be 0.2032mm (.008 inch) wide.

By these means a head assembly, mounted to move in an arc across a flexible disk, is centred in closely spaced relation on data tracks recorded on the flexible disk, at the outer tracks as well as the inner tracks.

## Claims

1. A magnetic head assembly for use in transducing coaction with a flexible magnetic disk, comprising a magnetic head (18) having a transducing gap (32) therein and grooved regions (30A, 30B, 34A, 34B, 40) on either side of the gap, characterised in that the head (18) is mounted on a pivoted support arm (20) for arcuate movement across the disk (10) and that the grooved regions located on the outboard side of the magnetic gap have a substantially larger area than the grooved regions on the inboard side of the magnetic gap.

2. An assembly according to claim 1, in which the grooved regions include a pair of symmetrical grooves (30A, 30B) and an offset groove (40).

3. An assembly according to claim 2, including an additional pair of symmetrical grooves (34A, 34B).

4. An assembly according to claim 2 or 3, in which the grooves are parallel.

5. An assembly according to claim 2, 3 or 4, in which the offset groove (40) is located closest to the outboard face (36) of the magnetic head (18).

6. An assembly according to claim 1, in which the grooved regions include at least one pair of parallel grooves (34A, 34B) formed in the magnetic head (18), one groove (34B) of the pair being wider than the other groove (34A) of the pair.

7. An assembly according to any preceding claim, in which the magnetic head (18) is formed from ferrite or ceramic slabs.

## Revendications

1. Un ensemble de tête magnétique destiné à être utilisé comme transducteur en association avec un disque magnétique souple, comprenant une tête magnétique (18) pourvu d'un entrefer transducteur (32) et de régions rainurées (30A, 30B, 34A, 34B, 40) de chaque côté de l'entrefer, caractérisé en ce que la tête (18) est montée sur un bras support (20) pivotant de façon à effectuer un déplacement incurvé à travers le disque (10) et que les régions rainurées situées sur le côté extérieur de l'entrefer magnétique présentent une surface sensiblement plus grande que les régions rainurées situées sur le côté intérieur de l'entrefer magnétique.

2. Un ensemble conforme à la revendication 1, dans lequel les régions rainurées comportent une paire de rainures symétriques (30A, 30B) et un rainure décalée (40).

3. Un ensemble conforme à la revendication 2, comprenant une paire supplémentaire de rainures symétriques (34A, 34B).

4. Un ensemble conforme à la revendication 2 ou 3, dans lequel les rainures sont parallèles.

5. Un ensemble conforme à la revendication 2, 3 ou 4, et dans lequel la rainure décalée (40) est située la plus près de la face entérieure (36) de la tête magnétique (18).

6. Un ensemble conforme à la revendication 1, dans lequel les zones rainurées comportent au moins une paire de rainures parallèles (34A, 34B) constitués dans la tête magnétique (18), une rainure (34B) de la paire étant plus large que l'autre rainure (34A) de la même paire.

7. Un ensemble conforme à l'une quelconque des revendications précédentes et dans lequel la tête magnétique (18) est faite de ferrite ou de lames de céramique.

**Patentansprüche**

1. Magnetkopfanordnung zur Verwendung in einem Wandlerzusammenwirken mit einer biegsamen Magnetschiebe, wobei die Magnetkopfanordnung einen Magnetkopf (18) mit einem darin enthaltenen Wandlerspalt (32) und mit gerillten Bereichen (30A, 30B, 34A, 34B, 40) auf beiden Seiten des Spalts aufweist, dadurch gekennzeichnet, daß der Kopf (18) auf einen schwenkbaren Trägerarm (20) für eine bogenförmige Bewegung über die Scheibe (10) angebracht ist, und daß die auf der Außenbordseite des Magnetspalts angeordneten gerillten Bereiche eine wesentlich größere Fläche haben als die gerillten Bereiche auf der Innenbordseite des Magnetkopfs.

2. Anordnung nach Anspruch 1, bei welcher die gerillten Bereiche ein Paar symmetrischer Rillen (30A, 30B) und eine versetzte Rille (40) enthalten.

3. Anordnung nach Anspruch 2, welche ein zusätzliches Paar symmetrischer Rillen (34A, 34B) enthält.

4. Anordnung nach Anspruch 2 oder 3, bei welcher die Rillen parallel sind.

5. Anordnung nach Anspruch 2, 3 oder 4, bei welcher die versetzte Rille (40) am nächsten zur Außenbordseite (36) des Magnetkopfes (18) angeordnet ist.

6. Anordnung nach Anspruch 1, bei welcher die gerillten Bereiche wenigstens ein Paar von im Magnetkopf (18) ausgebildeten parallelen Rillen (34A, 34B) enthält, wobei die eine Rille (34B) des Paares breiter als die andere Rille (34A) des Paares ist.

7. Anordnung nach irgendeinem vorstehenden Anspruch, bei welcher der Magnetkopf (18) aus Ferrit- oder Keramikscheiben ausgebildet ist.

0 049 755

FIG. 1

FIG. 2

FIG. 3

1

FIG. 4

FIG. 5